# EUROPEAN PATENT SPECIFICATION

(11) **EP 1 242 497 B1**
(45) Date of publication and mention of the grant of the patent: **30.09.2009**
(21) Application number: 00986652.6
(22) Date of filing: 20.12.2000
(51) Int. Cl.: C08G 63/06, D21H 19/28, B32B 27/10

(54) **USE OF BIODEGRADABLE PLASTIC FOOD SERVICE ITEMS**
VERWENDUNG VON BIOABBAUBAREN KUNSTOFFGEGENSTÄNDEN ZUM SERVIEREN VON NAHRUNGSMITTEL
UTILISATION D' ARTICLES DE RESTAURATION EN PLASTIQUE BIODEGRADABLE

(30) Priority: 30.12.1999 US 173847 P; 30.12.1999 US 173961 P
(43) Date of publication of application: 25.09.2002
(73) Proprietor: Meredian, Inc., Bainbridge, GA 39818 (US)
(72) Inventor: NODA, Isao, Fairfield, OH 45014 (US); SATKOWSKI, Michael, Matthew, Oxford, OH 45056 (US)
(74) Representative: Nargolwalla, Cyra
(86) International application number: PCT/US2000/034750
(87) International publication number: WO 2001/049770

(56) References cited:
- WO-A-91/13207
- US-A- 5 618 855
- PATENT ABSTRACTS OF JAPAN vol. 1998, no. 10, 31 August 1998 (1998-08-31) & JP 10 128920 A (KANEGAFUCHI CHEM IND CO LTD), 19 May 1998 (1998-05-19)

## Description

### TECHNICAL FIELD

This invention relates to biodegradable polyhydroxyalkanoate copolymers as grease resistance improving coating for substrates of food service items or as grease resistance providing component in such items.

### BACKGROUND ART

Polymers find uses in a variety of plastic articles including films, sheets, fibers, foams, molded articles, adhesives and many other specialty products. The majority of this plastic material ends up in the solid waste stream. While some efforts at recycling have been made, repeated processing of even pure polymers results in degradation of material and consequently poor mechanical properties. Different grades of chemically similar plastics mixed upon collection can cause processing problems that make the reclaimed material inferior or unusable.

Thus, there is a need for plastic articles which are biodegradable. Such articles would be particularly advantageous for use as food service items. Large numbers of disposable, often plastic, food service items are used in cafeterias, restaurants and hospitals. It would be advantageous for such plastic food service items to be formed from a plastic which has good resistance to penetration or leakage by liquids and/or grease, yet which is biodegradable. It is also desirable that plastic food service items be substantially free of plasticizers.

Albanese, U.S. Patent No. 4,984,367, discloses a combination utensil which may be made of biodegradable or recyclable material. Albanese discloses recyclable materials include plastics and cellulose derivatives such as wood, recyclable wood, wood pulp and chips and cardboard paper.

Durgin et al., U. S. Patent No. 5,085,366 disclose a method of continuously producing a smooth, high gloss coating on a paper container comprising the steps of applying a substantially uniform coating of melted wax material to the outside surface of the container or sheet stock, maintaining the temperature of the wax coating above its melting point and above its congealing temperature, imparting a constant surface velocity to the outside surface of the container or sheet stock and applying a substantially uniform film of liquid coolant, particularly water, to the outside surface of the container or sheet stock whereby the surface velocity of the coolant is substantially equal to the surface velocity of the container or sheet stock.

Matheson et al., U. S. Patent No., 5,281,446, disclose single ply paperboard containers wax-coated by directing a relatively narrow spray band of atomized wax towards the interior surfaces of the containers.

Spence, U.S. Patent No. 5,476,372, discloses a beverage container holder formed from a biodegradable water-soluble starch-based material.

Sinclair et al., U.S. Patent No. 5,760,118, disclose products made from degradable materials which include a hydrolytically degradable polymer. Sinclair et al. teach that biodegradable polymers can be used for items such as bags, containers, rings for six packs of cans and bottles, safety taper evidence wrap, straws and toothpicks, as well as products for controlled release of chemicals, clothing, absorbent articles, toys, garden products, and automobile parts.

Gruber et al., U,S. Patent No. 5,852,166, disclose paper having a melt-stable lactide polymer coating. Gruber et al. teach the lactide polymer comprises a plurality of poly(lactide) polymer chain.

Yeh et al., U.S. Patent No. 5,863,388, disclose a biodegradable and water-resistant paper product comprising a biodegradable and water-resistant agent selected from the group consisting of calcium stearate, cellulose stearate, calcium palmitate and cellulose palmitate, pulp, surfactant selected from a group consisting of rosin soap, sodium oleate, sodium stearate and sodium palmitate, and an aggregating agent such as alum.

Asrar et al., WO 99/04948, disclose methods of producing coated objects comprising melting a polyhydroxyalkanote, such as polyhydroxybutyrate or polyhydroxybutyrate-co-valerate, and extrusion coating the object. Asrar et al. teach the coating has a molecular weight of greater than 125,000 daltons.

There is a need for biodegradable food service items which have strong water resistant and grease resistant characteristics, are biodegradable, and which can be easily colored or printed. Preferably, such biodegradable food service items are substantially free of fugitive additives such as plasticizers, are tough, exhibit good self-sealability and adhesion to paper substrates, and are suitable for containing hot foods and beverages.

Unfortunately, many prior art biodegradable materials, such as, for example, polylactic acid polymers (PLAs), have softening temperatures below intended use temperatures. Such materials are not suitable for holding hot foods or hot beverages. Many prior art biodegradable materials, such as polyhydroxybutyrate-co-valerate, have melting temperatures close to their decomposition temperatures. It is preferred that the melting temperature of a biodegradable material be substantially lower than its decomposition temperature. Prior art biodegradable materials often exhibit poor self sealability and/or adhere poorly to paper substrates.

Many prior art plastic food service items are formed from materials which comprise fugitive additives, such as plasticizers. Additionally, many prior art food service items, particularly disposable food service items comprising a paper substrate, are lacking in strength or have poor water resistance and/or grease resistance. Further, many prior art biodegradable food service items are brittle, and thus the items may chip, causing a safety hazard. Some prior art biodegradable items such as PLAs may degrade spontaneously even under moderate atmospheric moisture. Other prior art biodegradable items are incapable of degrading under both aerobic and anaerobic conditions, and may require separation from food wastes.

### SUMMARY OF THE INVENTION

Accordingly, it is an object of this invention to obviate various problems of the prior art.

It is also an object of this invention to provide biodegradable food service items which can be aerobically or anaerobically degraded.

It is another object of this invention to provide biodegradable food service items which have good water and grease resistance characteristics, and which are suitable for holding hot foods and beverages.

It is yet another object of this invention to provide biodegradable food service items which are tough and will not easily chip.

It is a further object of this invention to provide biodegradable food service items 4 from a material which has a melting temperature substantially lower than its decomposition temperature.

It is also an object of this invention to provide biodegradable food service items which are substantially free of plasticizers.

It is another object of this invention to provide biodegradable food service items from biodegradable polymers which arc easily processed.

Further, it is an object of this invention to provide methods of improving grease resistance and liquid resistance of food service items comprising a paper substrate. As used herein, "liquid resistance" and "grease resistance" refer to the ability of an item to resist penetration or leakage by liquid and grease, respectively.

In accordance with one aspect of the invention there is provided the use as grease resistance providing component in food service items of a biodegradable polyhydroxyalkanoate copolymer comprising two randomly repeating monomer units wherein the first randomly repeating monomer unit has the structure: 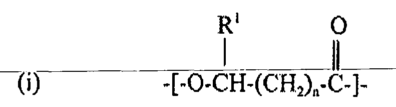
wherein R¹ is H, C₁ alkyl or C₂ alkyl, and n is I or 2; and
the second randomly repeating monomer unit has the structure: 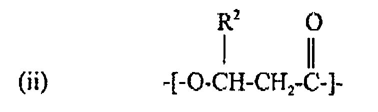
wherein R² is a C₃₋₁₉ alkyl or a C₃₋₁₉ alkenyl; and
wherein at least about 50% of the randomly repeating monomer units have the structure of the first randomly repeating monomer unit.

Food service items may be selected from the group consisting of plates, cups, cup holders and trays, wherein the food service item is formed from foam comprising the biodegradable polyhydroxyalkanoate copolymer.

In accordance with another aspect, the invention pertains to the use as grease resistance improving coating for substrates of food service items such as utensils, plates, cups, trays, cup holders, etc. of a biodegradable polyhydroxyalkanoate copolymer comprising two randomly repeating monomer units wherein the first randomly repeating monomer unit has the structure 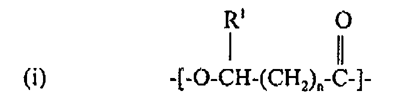
wherein R' is H, C₁ alkyl or C₂ alkyl, and n is 1 or 2; and
the second randomly repeating monomer unit has the structure: 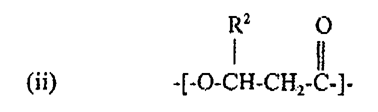
wherein R² is a C₃₋₁₉ alkyl or a C₃₋₁₉ alkenyl; and
wherein at least about 50% of the randomly repeating monomer units have the structure of the first randomly repeating monomer unit.

It is also possible to improve the resistance to liquid, particularly to water, of disposable food service items selected from the group consisting of utensils, plates, cups, trays, cup holders, toothpicks, straws, and sticks for food products such as lollipops and frozen snacks, such as POPSICLE® and ice cream novelties, and mixtures thereof.

It has been found that food service items may be provided with good grease and water resistance and good strength characteristics, yet are biodegradable.

These and additional objects and advantages will be more fully apparent in view of the following description,

### DETAILED DESCRIPTION

Applicants have found that food service items may comprise biodegradable polyhydroxyalkanoates (PHAs). Such food service items provide disposable and readily biodegradable items which exhibit good strength and good liquid and grease resistance. Such food service items are useful as picnic items or where a great number of meals are to be served, such as in cafeterias, restaurants and hospitals. Such items are particularly useful for "fast food" and "take-out" restaurants.

Surprisingly, PHAs in accordance with the present invention will biodegrade under both aerobic and anaerobic conditions; thus, items formed from the PHAs can biodegrade even when under water. The items may be disposed of into the food waste stream as a mixture of food waste and other items, for example, food waste and the biodegradable food items may be composted together. Biodegradation of the items will occur without harm to the environment, microorganisms or animals.

Biodegradable items in accordance with the invention are unexpectantly resistant to penetration by liquids and grease. The items are formed from PHAs having softening temperatures greater than the their intended use temperatures and are therefore suitable for containing hot food and beverages. The items are formed from PHAs which exhibit surprisingly good self-sealability and adhesion to paper substrates.

Further, unlike the homopolymer poly(3-hydroxybutyrate) (PHB) or the copoymer polyhydroxybutyrate-co-valerate (PHBV), PHAs in accordance with the invention are tough without being brittle. Thus, items comprising the PHAs are less likely to crack or chip. Applicants have found that polyhydroxyalkanoates in accordance with the present invention have lower melt temperatures, lower degrees of crystallinity and improved melt rheologies relative to polyhydroxybutyrate and polyhydroxybutyrate-co-valerate. As the PHAs of the present invention have low melting temperatures, the PHAs are easily processed into films and coatings. The PHAs of the present invention have melting temperatures substantially lower than their decomposition temperatures.

As used herein, "alkyl" refers to a saturated carbon-containing chain which may be straight or branched, and substituted (mono- or poly-) or unsubstituted, while, "alkenyl" refers to a carbon-containing chain which may be mono-unsaturated (i.e., one double bond in the chain) or poly-unsaturated (i.e., two or mor double bonds in the chain), straight or branched, and substituted (mono- or poly-) or unsubstituted.

As used herein, "PHA" refers to a polyhydroxyalkanoate of the present invention, "RRMU" refers to a randomly repeating monomer unit and "RRMUs" refers to randomly repeating monomer units.

As used herein, "biodegradable" refers to the ability of a compound to ultimately be degraded completely into CH₄, CO₂ and water or biomass by microorganisms and/or natural environmental factors.

As used herein, "compostable" refers to a material that meets the following three requirements: (1) the material is capable of being processed in a composting facility for solid waste; (2) if so processed, the material will end up in the final compost; and (3) if the compost is used in the soil, the material will ultimately biodegrade in the soil.

For example, a polymer film material present in solid waste submitted to a composting facility for processing does not necessarily end up in the final compost. Certain composting facilities subject the solid waste stream to air classification prior to further processing, in order to separate paper and other materials. A polymer film would most probably be separated from the solid waste stream in such an air classification and therefore not be processed in the composting facility. Nevertheless, it may still be a "compostable" material according to the above definition because it is "capable" of being processed in a composting facility.

The requirement that the material ends up in the final compost typically means that it undergoes a form of degradation in the composting process. Typically, the solid waste stream will be subjected to a shredding step in an early phase of the composting process. As a result, the polymer film will be present as shreds rather than a sheet. In the final phase of the composting process, the finished compost will be subjected to a screening step. Typically, the polymer shreds will not pass through the screens if they have retained the size they had immediately after the shredding step. The compostable materials of the present invention will have lost enough of their integrity during the composting process to allow partially degraded shreds to pass through the screens. However, it is conceivable that a composting facility might subject the solid waste stream to a very rigorous shredding and a rather coarse screening, in which case nondegradable polymers like polyethylene would meet requirement (2). Therefore, meeting requirement (2) is not enough for a material to be compostable within the present definition.

What distinguishes the compostable material as defined herein from material like polyethylene is requirement (3), that the material ultimately biodegrade in the soil. This biodegradability requirement is not essential to the composting process or the use of composting soil. Solid waste and the compost resulting therefrom may contain all kinds of nonbiodegradable materials, for example, sand. However, to avoid a build up of man-made materials in the soil, it is required herein that such materials be fully biodegradable. By the same token, it is not at all necessary that this biodegradation be fast. As long as the material itself and intermediate decomposition products are not toxic or otherwise harmful to the soil or crops, it is fully acceptable that their biodegradation takes several months or even years, since this requirement is present only to avoid an accumulation of man-made material in the soil. The copolymers according to the invention advantageously undergo rapid anaerobic biodegradation.

All copolymer composition ratios recited herein refer to molar ratios, unless specifically indicated otherwise. All percentages and parts are by weight, unless specifically indicated otherwise.

The polyhydroxyalkanoates used in the present invention made be synthetically prepared, or may be produced by a variety of biological organisms, such as bacteria or algae.

The polyhydroxyalkanoates may be atactic, isotactic or syndiotactic. The polyhydroxyalkanoates used herein are preferably substantially isotactic (from about 90% to about 100%, by weight, isotactic) or fully isotactic (about 100%, by weight, isotactic). The fully isotactic polyhydroxyalkanoates may be obtained from biological organisms, preferably polyhydroxyalkanoates used herein are obtained from biological organisms.

The polyhydroxyalkanoates are copolymers comprising at least about 2 different monomers. In some embodiment, the polyhydroxyalkanoates are copolymers comprising at least about 3 different monomers.

In one embodiment, the polyhydroxyalkanoate comprises at least two randomly repeating monomer units (RRMUs). The first randomly repeating monomer unit has the structure: 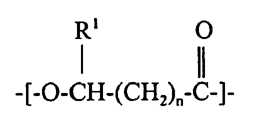 wherein R¹ is H or a C₁₋₂ alkyl, and n is 1 or 2. In a preferred embodiment, the first randomly repeating monomer unit is selected from the group consisting of the monomer wherein R¹ is a C₁ alkyl and n is 1 (the monomeric repeat unit 3-hydroxybutyrate); the monomer wherein R¹ is a C₂, alkyl and n is 1 (the monomeric repeat unit 3-hydroxyvalerate); the monomer wherein R¹ is H and n is 2 (the monomeric repeat unit 4-hydroxybutyrate); the monomer wherein R¹ is H and n is 1 (the monomeric repeat unit 3-hydroxypropionate); and mixtures thereof.

The second randomly repeating monomer unit has the structure: 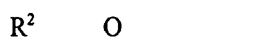 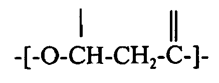 wherein R² is a C₃₋₉ alkyl or a C₃₋₁₉ alkenyl. Suitable second RRMUs include those wherein R² is a C₃₋₇ alkyl or alkenyl, a C₅ alkyl or alkenyl, a C₇ alkyl or alkenyl, a C₈₋₁₁ alkyl or alkenyl, a C₈ alkyl or alkenyl, a C₉ alkyl or alkenyl, a C₁₂₋₁₉ alkyl or alkenyl, a C₃₋₁₁, alkyl or alkenyl, or a C₄₋₁₉ alkyl or alkenyl.

In one embodiment of the present invention, at least about 50%, preferably at least about 60%, more preferably at least about 70%, even more preferably at least about 80%, more preferably still at least about 85%, of the RRMUs have the structure of the first RRMU.

When the polyhydroxyalkanoates of the present invention are processed into molded articles (e.g., injected or blow molded), preferably from about 80% to about 99%, more preferably from about 90% to about 98%, even more preferably from about 92% to about 97%, of the blend RRMUs of the PHAs have the structure of the first RRMU.

When the polyhydroxyalkanoates of the present invention are processed into thermoformed articles, preferably from about 70% to about 98%, more preferably from about 75% to about 97%, even more preferably from about 80% to about 96%, of the blend RRMUs of the PHAs have the structure of the first RRMU.

When the polyhydroxyalkanoates of the present invention are processed into foams, preferably from about 70% to about 97%, more preferably from about 80% to about96%, even more preferably from about 86% to about 95%, of the blend RRMUs of the PHAs have the structure of the first RRMU.

When the polyhydroxyalkanoates of the present invention are processed into films, sheets, or soft elastic fibers, preferably from about 50% to about 98%, more preferably from about 80% to about 97%, even more preferably from about 85% to about 96%, of the RRMUs of the PHAs have the structure of the first RRMU.

When the polyhydroxyalkanoates of the present invention are processed into normal fibers, preferably from about 80% to about 99%, more preferably from about 90% to about 98%, even more preferably from about 95% to about 97%, of the RRMUs of the PHAs have the structure of the first RRMU.

When the polyhydroxyalkanoates of the present invention are processed into elastomers or an adhesives, such as bandage adhesives, preferably at least about 50%, more preferably at least about 65%, of the RRMUs of the PHAs have the structure of the first RRMU.

When the polyhydroxyalkanoates of the present invention are processed into nonwoven fabrics, preferably from about 85% to about 99%, more preferably from about 90% to about 98%, even more preferably from about 95% to about 97%, of the RRMUs of the PHAs have the structure of the first RRMU.

In another embodiment, the polyhydroxyalkanoate of the present invention comprises a third or more additional RRMUs having the structure : 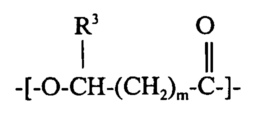 wherein R³ is H, a C₁₋₁₉ alkyl or a C₁₋₁₉ alkenyl, and m is 1 or 2; and wherein the additional RRMUs are not the same as the first RRMU or the second RRMU. In one embodiment the copolymer comprises from at least about 3, more preferably from about 3 to about 20 different RRMUs.

In one embodiment, R³ is a C₁₋₁₉ alkyl or a C₁₋₁₉ alkenyl, and m is 1, while in In one embodiment, R³ is a C₁₋₁₉ alkyl or a C₁₋₁₉ alkenyl, and m is 1, white in another embodiment R³ is a H, a C₁₋₂ alkyl or a C₁₋₂ alkenyl, and m is lor 2. In a preferred embodiment, the third RRMU is selected from the group consisting of the monomer wherein R³ is a C₁ alkyl and m is 1 (the monomeric repeat unit 3-hydroxybutyrate); the monomer wherein R³ is a C₂ alkyl and m is 1 (the monomeric repeat unit 3-hydroxyvalerate); the monomer wherein R³ is H and m is 2, (the monomeric repeat unit 4-hydroxybutyrate); the monomer wherein R³ is H and m is 1, (the monomeric repeat unit 3-hydroxypropionate) and mixtures thereof.

In another embodiment a polyhydroxyalkanoate according to the present invention comprises two RRMUs wherein the first RRMU has the structure: 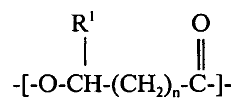 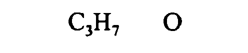 wherein R¹ is H or a C₂ alkyl, and n is 1 or 2; and the second RRMU has the structure: 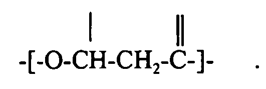 Preferably at least about 50% of the RRMUs have the structure of the first RRMU.

The one embodiment a polyhydroxyalkanoate according to the present invention comprises three RRMUs, a first RRMU having the structure: 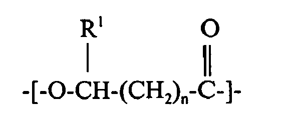 wherein R¹ is H or a C₁₋₂ alkyl, and n is 1 or 2; a second RRMU having the structure: 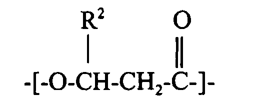 wherein R² is a C₃₋₁₉ alkyl or a C₃₋₁₉ alkenyl, preferably a C₄-₁₉ alkyl or a C₄₋₁₉ alkenyl; and a third RRMU. having the structure : 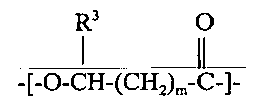 wherein R³ is H, a C₁₋₁₉ alkyl or a C₁₋₁₉ alkenyl, and m is 1 or 2; and wherein the third RRMU is not the same as the first RRMU or the second RRMU. Preferably at least 50% of the RRMUs have the structure of the first RRMU.

Preferably, the molecular weight of the polyhydroxyalkanoates is greater than about 50,000. In one embodiment the weight average molecular weight is no greater than about 400,000. In another embodiment the weight average molecular weight is greater than about 400,000, preferably greater than 500,000.

The volume percent crystallinity (Φ_{c}) of a semi-crystalline polymer (or copolymer) often determines what type of end-use properties the polymer possesses. For example, highly (greater than 50%) crystalline polyethylene polymers are strong and stiff, and suitable for products such as plastic cups. Low crystalline polyethylene, on the other hand, is flexible and tough, and is suitable for products such as bags. Crystallinity can be determined in a number of ways, including x-ray diffraction, differential scanning calorimetry (DSC), density measurements, and infrared absorption, as discussed by Noda, U. S. Patent No. 5,618,855, incorporated herein by reference.

In general, PHAs of the present invention preferably have a crystallinity of from about 5% to about 95% as measured via x-ray diffraction; more preferably from about 10% to about 80%; more preferably still from about 20% to about 60%.

When a PHA of the present invention is to be processed into a film, the amount of crystallinity in such PHA is more preferably from about 5% to about 60% as measured via x-ray diffraction; more preferably from about 10% to about 50%; more preferably still from about 20% to about 40%.

When a PHA of the present invention is to be processed into a sheet, the amount of crystallinity in such PHA is more preferably from about 5% to about 60% as measured via x-ray diffraction; more preferably from about 10% to about 50%; more preferably still from about 20% to about 40%.

When a PHA of the present invention is to be processed into a normal fiber or a nonwoven fabric, the amount of crystallinity in such PHA is more preferably from about 50% to about 95% as measured via x-ray diffraction; more preferably from about 60% to about 95%; more preferably still from about 70% to about 95%.

When a PHA of the present invention is to be processed into a soft elastic fiber, the amount of crystallinity in such PHA is more preferably from about 20% to about 90% as measured via x-ray diffraction; more preferably from about 30% to about 85%; more preferably still from about 40% to about 80%.

When a PHA of the present invention is to be processed into a molded or thermoformed article, the amount of crystallinity in such PHA is more preferably from about 10% to about 80% as measured via x-ray diffraction; more preferably from about 20% to about 70%; more preferably still from about 30% to about 60%.

When a PHA of the present invention is to be processed into an elastomer or adhesive, the amount of crystallinity in such PHA is more preferably less than about 50% as measured via x-ray diffraction; more preferably less than about 30%; more preferably still less than about 20%.

Preferably, the biodegradable PHAs of the present invention have a melt temperature (Tm) of from about 30°C to about 160°C, more preferably from about 60°C to about 140°C, more preferably still from about 90°C to about 130°C. Generally the . biodegradable PHAs of the present invention are prepared at processing temperatures of no more than about 150°C.

Suitable polyhydroxyalkanoates include those disclosed in Noda, U.S. Patents Nos. 5,498,692; 5,502,116; 5,536,564; 5,602,227; 5,618,855; 5,685,756; and 5,747,584, incorporated herein by reference. Examples of polyhydroxyalkanoates include: poly(3-hydroxybutyrate-co-hydroxyoctanoate) 7.5 mol% octanoate (PHB-O-7.5), poly(3-hydroxybutyrate-co-hydroxyhexanoate) 11 mol% hexanoate (PHB-Hx-11), poly(3-hydroxybutyrate-co-hydroxyhexanoate) 11.9 mol% hexanoate (PHB-Hx -11.9), poly(3-hydroxy butyrate-co-hydroxyhexanoate 12.1 mol% hexanoate (PHB-Hx -12.1), and poly(3-hydroxybutyrate-co-hydroxyhexanoate) 9.1 mol% hexanoate (PHB-Hx-9.1).

Food service items according to the present invention include utensils, plates, cups, cup lids, trays, cup holders, toothpicks, straws, sticks and mixtures thereof. Items such as plates, cups, cup lids, cup holders and trays may be formed from foam comprising the PHAs, may be molded articles, may be thermoformed articles, and also may be formed from wood or paper substrates coated with PHAs. Items such as utensils, straws, toothpicks and sticks will generally be molded articles, although some items, such as straws, may also be extruded. Items such as sticks may also be formed from wood coated with PHAs.

Many plastic items comprise plasticizers such as phthalate plasticizers or adipic acid derivatives such as di-2 ethyl hexyl adipate. Phthalate plasticizers refer to compounds comprising a phthalate group used as plasticizers. Such plasticizers include bis-2-ethylhexyl phthalate, also referred to as dioctyl phthalate (DOP) and di-2-ethylhexyl phthalate (DEHP), and diisononyl phthalate (DINP). Other phthalate plasticizers include butyl benzyl phthalate, butyl octyl phthalate, di-n-butyl phthalate, dicapryl phthalate, dicyclohexyl phthalate, diethyl phthalate, dihexyl phthalate, diisobutyl phthalate, diisodecyl phthalate, diisohectyl phthalate, diisooctyl phthalate, dimethyl phthalate, ditridecyl phthalate, diundecyl phthalate, undecyl dodecyl phthalate and mixtures thereof.

However, there is concern that plasticizers, particularly phthalate plasticizers may leach from plastic items. Thus, the present food service items are preferably substantially free of, more preferably free of, plasticizers, particularly phthalate plasticizers. As used herein, substantially free of means preferably no greater than 20%, more preferably no greater than 10%, even more preferably less than 5%, by weight, of the item is plasticizers. In one embodiment the item is free of plasticizers.

The item may comprise additives such as colorants. Preferably, such colorants are nonfugitive. As used herein, "nonfugitive" refers to an additive that does not escape from the polyhydroxyalkanoate copolymer at a faster rate than which the copolymer biodegrades. The food service items herein may be formed from a composition comprising the biodegradable polyalkanoate copolymer and colorant. Alternatively, colors and designs may be printed on the item after manufacture.

In one embodiment the food service items are formed from a polyhydroxyalkanoate comprising two randomly repeating monomer units. The first randomly repeating monomer unit has the structure: 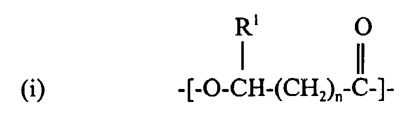 wherein R¹ is H or a C₁₋₂alkyl, and n is 1 or 2; and the second randomly repeating monomer unit has the structure: 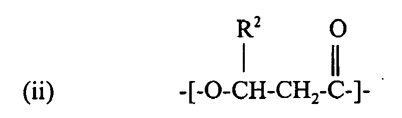 wherein R² is a C₃₋₁₉ alkyl or a C₃₋₁₉ alkenyl.

In another embodiment the polyhydroxyalkanoate comprises a third randomly repeating monomer unit having the structure: 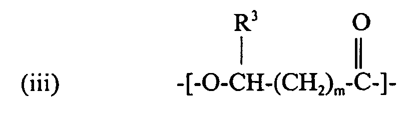 wherein R³ is H, a C₁₋₉ alkyl or a C₁₋₁₉ alkenyl, and m is 1 or 2, and the third RRMU is not the same as the first RRMU or the second RRMU. Polyhydroxyalkanoate copolymers comprising three RRMUs will generally comprise at least about 50% of the first RRMU, and generally no greater than about 20% of the third RRMU. The composition may comprise at least about 4%, more preferably at least about 5%, and even more preferably at least about 8%, and no more than about 15%, preferably no more than about 12%, more preferably no more than about 10% of the third RRMU. The preferred levels of monomers is dependent upon the desired characteristic of the article, that is, whether the article is a foam article, a molded article, a thermoformed article, an extruded article, or whether the article comprises a wood or paper substrate having a copolymer coating.

In a preferred embodiment, food service items are molded or thermoformed articles comprising a PHA. The molded or thermoformed articles generally have a thickness of no more than about 3 mm, preferably no more than about 2 mm, more preferably no more than about 1 mm think, even more preferably no more than about 0.7 mm. Generally, items such as plates and cups have a thickness of from about 2.5 mm to about 0.1 mm, preferably from about 2 mm to about 0.1 mm, more preferably about 0.5 mm, while utensils such as forks, knifes and spoons have a thickness of from about 5 mm to about 0.2 mm, preferably from about 4 mm to about 0.5 mm, more preferably about 1 mm.

Generally the weight average molecular weight of the PHA used to form molded or thermoformed articles will be greater than about 100,000, preferably greater than about 200,000, more preferably greater than about 300,000, and even more preferably greater than about 400,000. The PHA preferably comprises a first RRMU having formula (i) above, and a second RRMU having formula (ii) above. Preferably the PHA comprises at least about 80%, preferably from about 80% to about 95%, more preferably from about 82% to about 94% of total PHA, of the first RRMU having the formula (i) above. In one embodiment the food service items are molded or thermoformed articles comprising no more than about 20%, preferably from about 5% to about 20%, more preferably about 6% to about 18% of total PHA, of the total of the second RRMU having the formula (ii) above and any optional third RRMU having the formula (iii) above.

For molded or thermoformed utensils, such as spoons, forks and knives, the weight average molecular weight of the copolymer is generally greater than about 200,000, preferably greater than about 300,000. Preferably the PHA comprises at least about 80%, preferably from about 86% to about 97%, more preferably from about 92% to about 95% of total PHA, of the first RRMU having the formula (i) above. The molded utensils may comprise from about 3% to about 14%, preferably from about 5% to about 8% of total PHA, of the total of the second RRMU having the formula (ii) above and any optional third RRMU having the formula (iii) above.

For other molded or thermoformed articles, such as cups, cup lids, plates, cup holders and trays, the weight average molecular weight of the copolymer is generally greater than about 300,000, preferably greater than about 400,000. Preferably the PHA comprises at least about 80%, preferably from about 85% to about 95% of total PHA, of the first RRMU having the formula (i) above. The molded articles may comprise from about 5% to about 15% of total PHA, of the total of the second RRMU having the formula (ii) above and any optional third RRMU having the formula (iii) above.

In yet another embodiment, items such as cups, plates, cup holders and trays are formed from a PHA foam. The PHA preferably comprises a first RRMU having formula (i) above, and a second RRMU having formula (ii) above. Generally the PHA has a weight average molecular weight of greater than 300,000, preferably greater than about 400,000. Preferably the PHA comprises at least about 80%, preferably from about 84% to about 97%, more preferably from about 84% to about 96%, even more preferably from about 88% to about 95% of total PHA, of the first RRMU having the formula (i) above. In one embodiment the PHA foam comprises from about 3% to about 16%, preferably from about 4% to about 16%, even more preferably from about 5% to about 12% of total PHA, of the total of the second RRMU having the formula (ii) above and any optional third RRMU having the formula (iii) above.

In one embodiment, items such as straws are extruded items comprising a PHA. The PHA preferably comprises a first RRMU having formula (i) above, and a second RRMU having formula (ii) above. Preferably the weight average of molecular weight of the copolymer is greater than about 400,000. Preferably the PHA comprises at least about 80%, preferably from about 85% to about 94%, more preferably from about 88% to about 92% of total PHA, of the first RRMU having the formula (i) above. In one embodiment the extruded food service items comprise from about 6 % to about 15%, more preferably from about 8% to about 12% of total PHA, of the total of the second RRMU having the formula (ii) above and any optional third RRMU having the formula (iii) above.

In one embodiment, the food service items comprised a substrate having a coating comprising a PHA. Often the substrate will be a paper substrate. As used herein, "paper substrate" refers to a substrate formed from cellulose fiber, including paper and cardboard. A coating comprising PHA improves the water and grease resistance of paper substrates, such as, for example, coated paper plates, coated cardboard trays or coated paper cups. It may also be desirable to coat wooden substrates, such as wooden sticks, with a coating comprising PHA in order to provide the wooden substrate with a smoother surface.

The PHAs used as coatings preferably comprise a first RRMU having formula (i) above, and a second RRMU having formula (ii) above. Preferably the weight average of molecular weight of the copolymer is greater than 100,000, preferably greater than about 200,000. Preferably the PHA comprises at least about 80%, preferably from about 80% to about 96%, more preferably no greater than about 95% of total PHA, of the first RRMU having the formula (i) above. In one embodiment the PHAs used as coatings comprise from about 4% to about 20%, preferably at least about 5% of total PHA, of the total of the second RRMLT having the formula (ii) above and any optional third RRMU having the formula (iii) above. The coatings may further comprise colorants in order to provide the items with a more attractive appearance. The coatings may be applied to preformed articles in any convenient manner, such as spraying, dipping or extrusion coating.

In one embodiment, films or sheets comprise a PHA. Such films or sheet may be used to laminate substrates such as paper, and the resulting laminates may be used to form items such as coated paper plates or cups. As used herein, "film" means an extremely thin continuous piece of a substance having a high length to thickness ratio and a high width to thickness ratio. While there is no requirement for a precise range of thickness, a preferred film thickness range is from about 0.002mm to about 0.25mm, more preferably from about 0.005mm to about 0.10 mm, and more preferably from about 0.01 mm to about 0.05 mm. The films may be processed using conventional procedures for producing single or multilayer films on conventional film-making equipment. As used herein, "sheet" means a very thin continuous piece of a substance, having a high length to thickness ratio and a high width to thickness ratio, wherein the material is thicker than about 0.254 mm. Sheeting shares many of the same characteristics as film in terms of properties and manufacture, with the exception that sheeting is stiffer, and has a self-supporting nature.

Preferably the films or sheets comprise a PHA which comprises a first RRMU having formula (i) above, and a second RRMU having formula (ii) above. Preferably from about 50% to about 99%, more preferably from about 80% to about 98%, even more preferably from about 90% to about 97%, of the RRMUs of the PHA have the structure of the first RRMU. The weight average molecular weight of the PHA is generally greater than 100,000, preferably greater than 200,000, and more preferably greater than about 300,000. In one embodiment the films or sheets comprise no more than about 20%, preferably from about 20% to about 0.1 %, more preferably from about 10% to about 0.5% of total PHA, of the total of the second RRMU having the formula (ii) above and any optional third RRMU having the formula (iii) above.

Articles comprising PHAs may be made by any art-recognized process, such as those disclosed in Noda, U. S. Patent Nos. 5,618,885 and 5,602,227, incorporated herein by reference. For example, foams of the present invention may be processed using conventional procedures well-known to those skilled in the art. A predominant method of foam production involves expanding a fluid polymer (or copolymer) phase to a low density cellular phase and then preserving this state. Other processes include leaching out materials that have been previously dispersed in the polymer (or copolymer), sintering small particles and dispersing cellular particles in a polymer (or copolymer). Three steps make up the expansion process. These are cell initiation, cell growth and cell stabilization. Many methods are used to create, grow, and stabilize cells.

Expandable formulations rely on increasing the pressure within the initiated cells relative to that of the surroundings. The cells are stabilized by either chemical (e.g. crosslinking, polymerization) or physical means (crystallization, melt-glass transition). A blowing agent such as isomeric pentanes and hexanes or halocarbons is mixed with the polymer (or copolymer) either by heating and allowing the blowing agent to penetrate the polymer. Fabrication of articles are usually carried out in multiple steps, the first of which uses steam, hot water or hot air to expand the polymer into low density preformed beads. These preformed beads are aged, sometimes in multiple steps for correct cell size, and then packed into molds and fused together by heat and further expansion. Stabilization is accomplished by cooling the polymer to temperatures below its glass transition temperature.

Decompression expansion processes create and grow cells by lowering the external pressure during processing. Cellular polyethylene and polypropylene are often made in this manner. A decomposing blowing agent is premixed with the polymer (or copolymer) and fed through an extruder under elevated temperature and pressure such that the blowing agent partially decomposes. When the material exits the extruder, it enters a lower pressure zone. Simultaneous expansion and cooling take place, resulting in a stable cellular structure owing to rapid crystallization of the polymer.

Dispersion processes produce foams by directing dispersing solid or gas into the polymer (or copolymer) phase and then, when necessary, stabilizing the mixture. In one such process, frothing, a gas is mechanically dispersed in the polymer or monomer phase, producing a foam of temporary stability. This foam is then chemically stabilized by crosslinking or polymerization. Latex foam rubber is manufactured in this way.

Molded articles can be solid objects or hollow. Injection molding of thermoplastics is a multi-step process by which a PHA of the present invention is heated until it is molten, then forced into a closed mold where it is shaped, and finally solidified by cooling. There are a variety of machines that are used in injection molding. Three common types are ram, screw plasticator with injection, and reciprocating screw devices. A ram injection molding machine is composed of a cylinder, spreader, and plunger. The plunger forces the melt in the mold. A screw plasticator with a second stage injection consists of a plasticator, directional valve, a cylinder without a spreader, and a ram. After plastication by the screw, the ram forces the melt into the mold. A reciprocating screw injection machine is composed of a barrel and a screw. The screw rotates to melt and mix the material and then moves forward to force the melt into the mold.

Compression molding in thermoplastics consists of charging a quantity of a PHA of the present invention in the lower half of an open die. The top and bottom halves of the die are brought together under pressure, and then molten PHA conforms to the shape of the die. The mold is then cooled to harden the plastic.

Blow molding is used for producing bottles and other hollow objects. In this process, a tube of molten PHA known as a parison is extruded into a closed, hollow mold. The parison is then expanded by a gas, thrusting the PHA against the walls of a mold. Subsequent cooling hardens the plastic. The mold is then opened and the article removed.

Blow molding has a number of advantages over injection molding. The pressures used are much lower than injection molding. Blow molding can be typically accomplished at pressures of from about 25 to about 100 psi between the plastic and the mold surface. By comparison, injection molding pressures can reach from about 10,000 to about 20,000 psi. In cases where the PHA has a have molecular weights too high for easy flow through molds, blow molding is the technique of choice. High molecular weight polymers (or copolymers) often have better properties than low molecular weight analogs, for example high molecular weight materials have greater resistance to environmental stress cracking. It is possible to make extremely thin walls in products with blow molding. This means less PHA is used, and solidification times are shorter, resulting in lower costs through material conservation and higher throughput. Another important feature of blow molding is that since it uses only a female mold, slight changes in extrusion conditions at the parison nozzle can vary wall thickness. This is an advantage with structures whose necessary wall thicknesses cannot be predicted in advance.

As used here, "thermoforming" refers to a process by which planks or sheets of the polyhydroxyalkanote are heated until flexible and then stamped or vacuum pulled into the proper shape. Generally a sheet is fed through an oven and heated to bring it to a thermoformable temperature. The sheet is heated to a softening point and then advanced to a forming station. Alternatively, a sheet may move directly from an extruder to a forming station by means of a series of rolls, which can either be heated or cooled to bring the sheet to the proper thermoforming temperature. The forming station comprises molds or stamps of the desired shapes.

Coated articles may be formed using any conventional coating technique. Coating techniques include extrusion coating, roller coating, brush coating, dip coating, spray coating, electrostatic coating, centrifugal coating and cast coating. Articles may be coated with melted PHA, and then exposed to a coolant, such as water, by any acceptable method, such as dipping or spraying. As used herein, "coated items" includes items formed from laminates of a paper substrate and a film or sheet comprising a PHA.

Coating equipment may be used to apply a surface coating to a substrate. Suitable substrates include porous web, such as paper or cardboard. The coatings may serve as barriers, decorative coatings, or other purposes. Coating may be used to apply adhesive for laminating one web to another or for manufacturing of pressure-sensitive tapes and labels. It also may be used for saturation of a porous web, such as paper, in order to improve its resistance to moisture or grease penetration, or to improve its strength.

Coatings when applied must be sufficiently fluid to be spread into a uniformly thin layer across the web. Therefore, coatings are applied as solutions in organic solvents, as aqueous solutions or emulsions, as a hot melt (solid molten or softened by heat), or as a reactive liquid that solidifies by a polymerization reaction induced either thermally or by radiation. Extrusion coating is similar to hot-melt coating.

Coatings may be applied directly to the substrate, or may be cast to another surface, dried, and later transferred to the substrate. This transfer coating process is used for manufacturing of, for example, pressure-sensitive label stock: the adhesive is first applied to a silicone-coated release liner, dried, and then laminated to the label face stock. Coatings may be applied to the web material wound in rolls, or to precut sheets. Items such as disposable plates and trays may be formed by pressing coated paperboard blanks between forming dies, as disclosed in Shanton, U. S. Patent No. 5,776,619, incorporated herein by reference.

In extrusion coating, a film of molten polymer is deposited between two moving webs in a nip created by a rubber pressure roll and a chrome-plated steel chill roll. In this continuous operation, rolls of material are unwound, new rolls are automatically spliced on the fly, and the surface of the substrate is prepared by chemical priming or other surface treatment to make it receptive to the extrusion coating, and to help develop adhesion between the two materials.

Several preferred embodiments are illustrated in the following non-limiting examples.

### Example 1. Utensil comprising poly(3-hydroxybutyrate-co-hydroxyoctanoate) 7.5 mole% octanoate.

A mold of the desired article is fashioned out of a suitable material, preferably the mold is aluminum. In one embodiment the utensil is a knife 13 cm long; 1.75 cm wide at the widest point, near the middle of the blade portion; 1 cm wide at the narrowest point, where the handle meets the blade portion; and 0.2 cm thick at the thickest portion, the back of the blade.

About 5 grams of poly(3-hydroxybutyrate-co-3-hydroxyoctanoate) 7.5mol% octanoate (PHB-O-7.5) is placed in the mold. The material is placed evenly along the length of the mold. The mold is then closed and placed in a Carver Press (Menomonee Falls, WI) that has been preheated to about 150°C. The mold is allowed to sit for about one minute to come to the desired temperature. Then a force of about 10,000 1b. is applied to mold for an additional period of time, generally about 2 minutes. After this, the mold is removed from the press and allowed to cool for about 20 minutes at room temperature (from about 17°C to about 24°C). The mold is opened and the article is trimmed of any excess polymer. The knife can be used for cutting soft foods.

### Example 2. Plate comprising poly(3-hydroxybutyrate-co-hydroxyoctanoate) 7.5mol% octanoate.

A mold of the desired plate size is fashioned out of a suitable material, preferably the mold is aluminum. The plate size is round, 13 cm in diameter and 2 mm thick. About 24 g of poly(3-hydroxybutyrate-co-hydroxyoctanoate) 7.5mol% octanoate (PHB-O-7.5) is distributed in the mold. To increase the ease of pressing the plate, the PHB-O-7.5 is first pressed into sheets about 1 mm thick and about 9 cm in diameter in a Carver press between Teflon sheets at about 145°C for about 60 seconds at about 5000 1b. force. The sheets are removed and allowed to cool for about 20 minutes before being cut up into pieces that will fit in the plate mold. The pieces of sheets are placed in the plate mold as evenly as possible. The mold is closed and placed in a Carver press at about 150°C for about 60 seconds. Then about 10,000 1b. force is applied and held for an additional period of time, generally about two minutes. The plate mold is removed from the Carver press and allowed to cool for about twenty minutes. The mold is then opened and the plate is removed. The plate is a solid sheet structure that is capable of holding food items. It resists penetration by water and grease.

### Example 3. Foam plate comprising poly(3-hydroxybutyrate-co-hydroxyoctanoate) 11.9 mol% octanoate.

A mold of the desired shape and size is made out of a suitable material, preferably the mold is aluminum. A food container that can enclose hot or cold foods such as sandwiches, side dishes or entrees is made from two identical pieces that when placed together form a container that is functionally and in appearance identical to a clamshell holder. The piece has a square base that is 10 cm on a edge. From the base, sides emerge sloping outward and upward a total of 3 cm. The sides terminate in a lip of width 1 cm that extends outward and around the opening of the shell. The piece forms a open-topped box-like structure, that when fitted together with an identical piece forms a clamshell structure to enclose food.

Poly(3-hydroxybutyrate-co-hydroxyoctanoate) 11.9 mol% octanoate (PHB-O -11.9) and a commercial blowing agent O(C₆H₄SO₂ NHNH₂)₂ (4,4' -oxydibenzenesulfonyl hydrazide) are blended together in chloroform at about 55°C so that by weight PHB-O-11.9:blowing agent is in proportions of about 90:10. The PHB-O-11.9 and blowing agent are mixed in chloroform so that the PHB-O -11.9 and blowing agent is 10% by weight of the solution. After mixing for about 1 hour, the solution is placed in a dish and the solvent is allowed to evaporate. The resulting powder is then pressed between Teflon sheets in a carver press at about 130°C at about 500 1bs force for about 1 minute. The resulting sheet is cut into pieces and placed in the clamshell mold. The mold is closed and put in the Carver press preheated to about 120°C. The temperature is allowed to equilibrate for about 5 minutes and then the temperature is raised to about 155°C and held for about 60 sec. This activates the blowing agent and the material foams to fill the mold. The mold is removed from the press and allowed to cool down to room temperature. The mold is opened and the clamshell removed. Another piece is made and then the two lids are assembled to form the container.

### Example 4. Thermoformed bowl comprising poly(3-hydroxybutyrate-co-hydroxyoctanoate) 11.9 mol% octanoate.

A sheet of poly(3-hydroxybutyrate-co-hydroxyoctanoate) 11.9mol% (PHB-O-11.9) is formed in the following manner 8 g of PHB-O-11.9 is placed between Teflon sheets with a 6 mil spacer. The carver press is preheated to 130°C . The film is pressed at 5000 1b. for 2 minutes, then is removed from the press and allowed to come to room temperature. Thermoforming is accomplished by heating the film to just below the melt temperature, placing the sheet over a mold designed for vacuum forming. The mold is in the shape of a bowl, 12 cm in diameter and 3 cm deep. The sheet is heated to about 115°C and vacuum is applied, drawing the softened polymer sheet down into the mold and conforming it to the mold. The bowl is allowed to cool and then removed from the mold.

### Example 5. Cup comprising poly(3-hydroxybutyrate-co-hydroxyoctanoate) 11 mol% octanoate.

Films of poly(3-hydroxybutyrate-co-3-hydroxyoctanoate) 11 mol% octanoate (PHB-O-11) are made extrusion casting from a flat die. The extruder is a Hake twin screw extruder operated at about 140°C in all zones. The molten film is taken up on rolls, and the film is separated by release paper and allowed to crystallize. The film is nominally 2 mil thick. Paper about 0.3 mm thick is laminated with PHB-O-11 films by placing the paper on top of the plastic film and then sandwiching them between release paper. The stack of release paper-film-paper-release paper is fed through an Idesco laminator model 6000 (New York, NY).

The laminated paper can be formed into a cup by cutting a parallelepiped piece 17 cm on one end, 26 cm on the opposite end, and with sides approximately 14 cm. The paper is rolled so that the 14 cm sides are brought together and overlap by 0.5 cm with the PHB laminated side facing the interior, and glued together. The open ends are trimmed so that they are perpendicular to the cylinder axis. A circular piece of PHB laminated paper is inserted into the smaller opening and glued into place, and the edges crimped to form a tight seal. The construction forms a cup that is capable of holding hot or cold beverages without leaking or soaking through to the paper.

### Example 6. Utensil comprised of poly(3-hydroxybutyrate-co-hydroxyhexanoate) 7.5 mol% hexanoate.

A mold of the desired utensil is fashioned out of aluminum. The utensil is a knife 13 cm long, 1.75 cm wide at the widest point, near the middle of the blade portion; 1 cm wide at the narrowest point, where the handle meets the blade portion; and 0.2cm thick at the thickest portion, the back of the blade.

About 5 grams of poly(3-hydroxybutyrate-co-3-hydroxyhexanoate) 7.5mol% octanoate (PHB-Hx-7.5) is placed in the mold. The material is placed evenly along the length of the mold. The mold is then closed and placed in a Carver Press (Menomonee Falls, WI) that has been preheated to 150°C. The mold is allowed to sit for one minute to come to 150°C. Then a force of 10,000 1b. is applied to mold for an additional 2 minutes. After this, the mold is removed from the press and allowed to cool for at least 20 minutes at room temperature. The mold is opened and the article is trimmed of any excess polymer. The knife can be used for cutting soft foods.

### Example 7. Plate comprised of poly(3-hydroxybutyrate-co-hydroxyhexanoate) 7.5mol% hexanoate.

A mold of the desired plate size is fashioned out of aluminum. The plate size is round, 13 cm in diameter and 2 mm thick . About 24 g of poly(3-hydroxybutyrate-co-hydroxyhexanoate) 7.5mol% hexanoate (PHB-Hx-7.5) is distributed in the mold. To increase the ease of pressing the plate, the PHB-Hx-7.5 is first pressed into sheets about 1 mm thick and 9 cm in diameter in a Carver press between Teflon sheets at 145°C for 60 seconds at 5000 1b. force. The sheets are removed and allowed to cool for 20 minutes before being cut up into pieces that will fit in the plate mold. The pieces of sheets are placed in the plate mold as evenly as possible. The mold is closed and placed in a Carver press at 150°C for 60 seconds. Then 10,000 1b. force is applied and held for an additional two minutes. The plate mold is removed from the Carver press and allowed to cool for twenty minutes. The mold is then opened and the plate is removed. The plate is a solid sheet structure that is capable of holding food items. It resists penetration by water and grease.

### Example 8. Foam plate comprised of poly(3-hydroxybutyrate-co-hydroxyhexanoate) 11.9 mol% hexanoate.

A mold of the desired shape and size is made out of aluminum. A food plate or small bowl that can hold hot or cold foods such as soups, side dishes or entrees is made from a piece has a circular base that is 10 cm in diameter. From the base, sides emerge sloping outward and upward a total of 3 cm. The sides terminate in a lip of width 1 cm that extends outward and around the opening of the plate. Poly(3-hydroxybutyrate-co-hydroxyhexanoate) 11.9 mol% hexanoate (PHB-Hx -11.9) and a commercial blowing agent O(C₆H₄SO₂NHNH₂)2 4, 4'-Oxydibenzenesulfonyl hydrazide (Aldrich) arc blended together in chloroform at 55°C so that by weight PHB-Hx-11.9:Blowing agent is in proportions of 90:10. The PHB-Hx-11.9%and blowing agent are mixed in chloroform so that the PHB-Hx and blowing agent is 10% by weight of the solution. After mixing for 1 hour, the solution is placed in a dish and the solvent is allowed to evaporate. The resulting powder is then pressed between Teflon sheets in a carver press at 130°C at 500lbs force for 1 minute. The resulting sheet is cut into pieces and placed in the plate mold. The mold is closed and put in the Carver press preheated to 120°C. The temperature is allowed to equilibrate for 5 minutes and then the temperature is raised to 155°C and held for 60 sec. This activates the blowing agent and the material foams to fill the mold. The mold is removed from the press and allowed to cool down to room temperature. The mold is opened and the plate removed.

### Example 9. Thermoformed bowl made of poly(3-hydroxybutyrate-co-hydroxyhexanoate) 11.9 mol% hexanoate.

A sheet of poly(3-hydroxybutyrate-co-hydroxyhexanoate) 11.9mol% (PHB-Hx-11.9) is formed in the following manner 8 g of PHB-Hx-11.9 is placed between Teflon sheets with a 6 mil spacer. The carver press is preheated to 130°C . The film is pressed at 5000 1b. for 2 minutes, then is removed from the press and allowed to come to room temperature. Thermoforming is accomplished by heating the film to just below the melt temperature, placing the sheet over a mold designed for vacuum forming. The mold is in the shape of a bowl , 12 cm in diameter and 3 cm deep. The sheet is heated to about 115°C and vacuum is applied, drawing the softened polymer sheet down into the mold and conforming it to the mold. The bowl is allowed to cool and then removed from the mold.

### Example 10. Cup comprised of paper laminated with poly(3-hydroxybutyrate-co-hydroxyhexanoate) 11 mol% hexanoate.

Films of Poly(3-hydroxybutyrate-co-3-hydroxyhexanoate) 11mol% hexanoate (PHB-Hx-11) are made by extrusion casting from a flat die. The extruder is a Hake twin screw extruder operated at about 140°C in all zones. The molten film is taken up on rolls, and the film is separated by release paper and allowed to crystallize. The film is nominally 2 mil thick. Paper about 0.3 mm thick is laminated with PHB-Hx-11 films by placing the paper on top of the plastic film and than sandwiching them between release paper. The stack of release paper-film-paper-release paper is fed through an Idesco laminator model 6000 (New York, NY). The laminated paper can be formed into a cup by cutting a parallelepiped piece 17 cm on one end, 26 cm on the opposite end, and with sides approximately 14 cm. The paper is rolled so that the 14 cm sides are brought together and overlap by 0.5 cm with the PHB laminated side facing the interior, and glued together. The open ends are trimmed so that they are perpendicular to the cylinder axis. A circular piece of PHB laminated paper is inserted into the smaller opening and glued into place, and the edges crimped to form a tight seal. The construction forms a cup that is capable of holding hot or cold beverages without leaking or soaking through to the paper.

### Example 11. Cup comprised of paper laminated with a poly(3-hydroxybutyrate-co-hydroxyhexanoate) 11 mol% hexanoate/triacetin/polyhydroxybutyrate blend.

A film of a blend of poly(3-hydroxybutyrate-co-3-hydroxyhexanoate (12.1% hexanoate), PHB-Hx 12.1 %/ Triacetin / polyhydroxybutyrate (PHB) in proportion of 85/12/3 is prepared from extrusion from the melt. The neat PHB -Hx power, PHB powder, and triacetin is run through a Haake twin screw extruder fitted with a strand die at 150°C. The strand is run through a water bath at a temperature of 40°C. The strands run through a Berlyn pelletizer to create pellets. The pellets are fed into a hopper of a Haake single screw extruder with 6 inch flat die. The screw barrel and die temperatures are set 130°C. The film is taken up with Haake cast film haul-off unit, with release paper separating the PHA film layers to prevent blocking. Paper about 0.3 mm thick is laminated with PHB-Hx-11 films by placing the paper on top of the plastic film and than sandwiching them between release paper. The stack of release paper-film-paper-release paper is fed through an Idesco laminator model 6000 (New York, NY). The laminated paper can be formed into a cup by cutting a parallelepiped piece 17 cm on one end, 26 cm on the opposite end, and with sides approximately 14 cm. The paper is rolled so that the 14 cm sides are brought together and overlap by 0.5 cm with the PHB laminated side facing the interior, and heat sealed together. The heat sealing can be accomplished by applying hot air to the area to be sealed. In this example hot air of approximately 900°F at exit of the heat gun was applied to the seam area for no more than 1second. The distance from the air gun and the paper/polymer laminate was about 1 inch. The open ends are trimmed so that they are perpendicular to the cylinder axis. A circular piece of PHB laminated paper is inserted into the smaller opening and also heat sealed in place and the edges crimped to form a tight seal. The construction forms a cup that is capable of holding hot or cold beverages without leaking or soaking through to the paper.

### Example 12. Paper plate comprised of paper laminated with poly(3-hydroxybutyrate-co-3-hydroxyhexanoate) 11 mole % hexanoate paper.

Films of poly(3-hydroxybutyrate-co-3-hydroxyhexanoate) 11 mol% hexanoate (PHB-Hx-11%) are made extrusion casting from a flat die. The extruder is a Hake twin screw extruder operated at about 140°C in all zones. The molten film is taken up on rolls, and the film is separated by release paper and allowed to crystallize. The film is nominally 2 mil thick. Paper stock about 0.65 mm thick is laminated with PHB-Hx-11% films by placing the paper on top of the plastic film and than sandwiching them between release paper. The stack of release paper-film-paper-release paper is fed through an Idesco laminator model 6000 (New York, NY). The laminated paper can be formed into plate by cutting out a circle, 24 cm in diameter out of the paper laminate. The flat paper sheet is creased in alternating directions around the rim of the plate inward to about 6cm from the center. The alternating creases gives the paper some structural stability. The plate is capable of holding food items. It resists penetration by water and grease into the paper.

### Example 13. A straw formed out of poly(3-hydroxybutyrate-co-3-hydroxyhexanoate) 9.1 mol % hexanoate.

Straws comprising poly(3-hydroxybutyrate-co-3-hydroxyhexanoate) 9.1 mol% hexanoate (PHB-Hx-9.1) are made by extrusion of molten polymer through an 1/4 inch tube die. The extruder is a Hake twin screw extruder operated at about 150°C in all zones. The extrudate is passed through a water bath at a temperature of 60°C. The bath is about 2 meters long. The extruded tubes are cut at 7 inch lengths and form a drinking straw.

### Example 14. A frozen treat stick formed out of poly(3-hydroxybutyrate-co-3-hydroxyoctanoate) 7.5 mol% octanoate.

A mold of interior dimensions 13 cm by 13 cm by 2 mm is fashioned out of aluminum. About 40 grams of poly(3-hydroxybutyrate-co-3-hydroxyoctanoate) 7.5 mol% octanoate (PHB-O-7.5) is placed in the mold. The material is placed evenly along the length of the mold. The mold is then closed and placed in a Carver Press (Menomonee Falls, WI) that has been preheated to 150°C. The mold is allowed to sit for one minute to come to the desired temperature. Then a force of 10,000 1b. is applied to mold for an additional 2 minutes. After this, the mold is removed from the press and allowed to cool for 20 minutes at room temperature. The mold is opened and the polymer sheet is trimmed of any excess polymer. From the sheet, a frozen treat stick 4 inches long, 1 inch cm wide with rounded top is cut using a die of appropriate dimensions. The sheet is placed into the Carver press and the cutting die placed on top of the sheet. The press is subjected to a force of 10,000 1b., or lower if the cut occurs sooner. The treat stick then can be inserted into treats such as ice cream, frozen sweetened beverages during the manufacture of these items.

### Example 15. Foam clamshell 1 comprised of poly(3-hydroxybutyrate-co-hydroxyhexanoate) 11.9 mol%.

A mold of the desired shape and size is made out of aluminum. A food container that can enclose hot or cold foods such as sandwiches, side dishes or entrees is made from two identical pieces that when placed together form a container that is functionally and in appearance identical to a clamshell holder. The piece has a square base that is 10 cm on a edge. From the base, sides emerge sloping outward and upward a total of 3 cm. The sides terminate in a lip of width 1 cm that extends outward and around the opening of the shell. The piece forms a open-topped box-like structure, that when fitted together with an identical piece forms a clamshell structure to enclose food. Poly(3-hydroxybutyrate-co-hydroxyhexanoate) 11.9 mol% hexanoate (PHB-Hx -11.9), polyhydroxybutyrate (PHB) and a commercial blowing agent O(C₆H₄SO₂NHNH₂)2 4, 4' -Oxydibenzenesulfonyl hydrazide are blended together in chloroform at 55°C so that by weight PHB-Hx-11.9:PHB:Blowing agent is in proportions of 88:2:10. The PHB-Hx-11.9, PHB and blowing agent are mixed in chloroform so that the PHB-Hx, PHB and blowing agent is 10% by weight of the solution.. After mixing for 1 hour, the solution is placed in a dish and the solvent is allowed to evaporate. The resulting powder is then pressed between Teflon sheets in a carver press at 130°C at 500 1b. force for 1 minute. The resulting sheet is cut into pieces and placed in the clamshell mold. The mold is closed and put in the Carver press preheated to 120°C. The temperature is allowed to equilibrate for 5 minutes and then the temperature is raised to 155°C and held for 60 sec. This activates the blowing agent and the material foams to fill the mold. The mold is removed from the press and allowed to cool down to room temperature. The mold is opened and the clamshell removed. Another piece is made and then the two lids are assembled to form the container.

Additional embodiments and modifications within the scope of the claimed invention will be apparent to one of ordinary skill in the art. Accordingly, the scope of the present invention shall be considered in the terms of the following claims, and is understood not to be limited to the details, examples or the methods described in the specification.

## Claims

1. Use of a biodegradable polyhydroxyalkanoate copolymer comprising two randomly repeating monomer units wherein the first randomly repeating monomer unit has the structure: 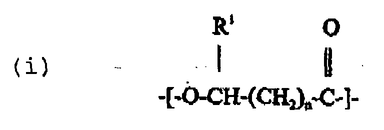 wherein R¹ is H or a C₁₋₂ alkyl, and n is 1 or 2; and the second randomly repeating monomer unit has the structure: 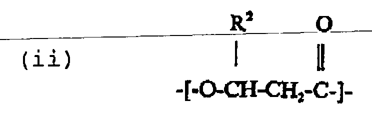 wherein R² is a C₃₋₁₉ alkyl or a C₃₋₁₉ alkenyl, and wherein at least 50% of the randomly repeating monomer units have the structure of the first randomly repeating monomer unit
as grease resistance improving coating for substrates of food service items.

2. The use according to claim 1 wherein the food service item comprises a paper substrate or a wooden substrate.

3. Use of a biodegradable polyhydroxyalkanoate copolymer comprising two randomly repeating monomer units wherein the first randomly repeating monomer unit has the structure: 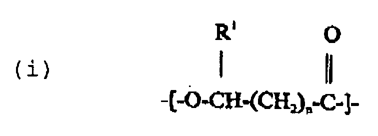 wherein R¹ is H or a C₁₋₂ alkyl, and n is 1. or 2; and the second randomly repeating monomer unit has the structure: 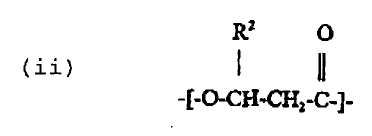 wherein R² is a C₃-₁₉ alkyl or a C₃₋₁₉ alkenyl; and wherein at least 50% of the randomly repeating monomer units have the structure of the first randomly repeating monomer unit
as grease resistance providing component in food service items.

4. The use according to claim 3 wherein the food service item is selected from utensils, plates, cups, cup lids, trays, cup holders, toothpicks, straws, sticks and mixtures thereof.

5. The use according to claim 3 or 4 wherein the food service item is a molded item having a thickness of no more than 3 mm, wherein the food service item is preferably molded by injection molding or blow molding.

6. The use according to any of claims 1 to 5 wherein the biodegradable polyhydroxyalkanoate copolymer further comprises a third randomly repeating monomer unit having the structure: 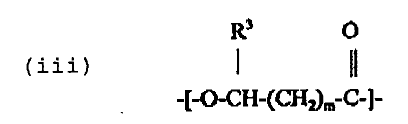 wherein R³ is H, a C₁₋₁₉ alkyl or a C₁₋₁₉ alkenyl, and m is 1 or 2; and wherein the additional randomly repealing monomer unit is not the same as the first randomly repeating monomer unit or the second randomly repeating monomer unit.

## Patentansprüche

1. Verwendung eines biologisch abbaubaren Polyhydroxyalkanoat-Polymers, umfassend zwei zufällig wiederholte Monomereinheiten, wobei die erste zufällig wiederholte Monomereinheit die folgende Struktur aufweist: 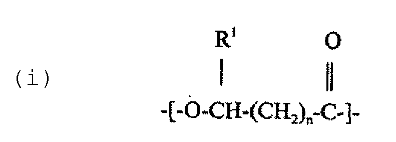 wobei R¹ H oder ein C₁₋₂-Alkyl ist, und n 1 oder 2 ist; und das zweite zufällig wiederholte Monomer die folgende Struktur aufweist: 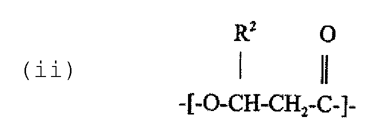 wobei R² ein C₃₋₁₉-Alkyl oder ein C₃₋₁₉-Alkenyl ist; und wobei mindestens 50% der zufällig wiederholten Monomereinheiten die Struktur der ersten zufällig wiederholten Monomereinheit aufweisen
als Beschichtung, die die Fettresistenz für Substrate von Catering-Gegenständen verbessert.

2. Verwendung nach Anspruch 1, wobei der Catering-Gegenstand ein Papiersubstrat oder ein Holzsubstrat umfasst.

3. Verwendung eines biologisch abbaubaren Polyhydroxyalkanoat-Polymers, umfassend zwei zufällig wiederholte Monomereinheiten, wobei die erste zufällig wiederholte Monomereinheit die folgende Struktur aufweist: 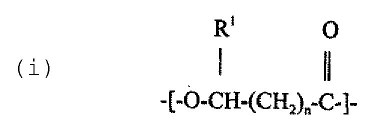 wobei R¹ H oder ein C₁₋₂-Alkyl ist, und n 1 oder 2 ist; und das zweite zufällig wiederholte Monomer die folgende Struktur aufweist: 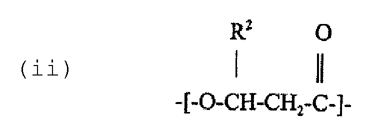 wobei R² ein C₃₋₁₉-Alkyl oder ein C₃₋₁₉-Alkenyl ist; und wobei mindestens 50% der zufällig wiederholten Monomereinheiten die Struktur der ersten zufällig wiederholten Monomereinheit aufweisen
als Fettresistenz bereitstellende Komponente in Catering-Gegenständen.

4. Verwendung nach Anspruch 3, wobei der Catering-Gegenstand aus Geräten, Tellern, Tassen, Tassendeckeln, Tabletts, Tassenhaltern, Zahnstochern, Strohhalmen, Stiften und Mischungen daraus ausgewählt wird.

5. Verwendung nach Anspruch 3 oder 4, wobei der Cartering-Gegenstand ein geformter Gegenstand ist, der eine Dicke von nicht mehr als 3 mm aufweist, wobei der Catering-Gegenstand vorzugsweise durch Spritzgießen oder Blasgeissen geformt wird.

6. Verwendung nach einem der Ansprüche 1 bis 5, wobei das biologisch abbaubare Polyhydroxyalkanoat-Kopolymer weiter einer dritte zufällig wiederholte Monomereinheit umfasst, die folgende Struktur aufweist: 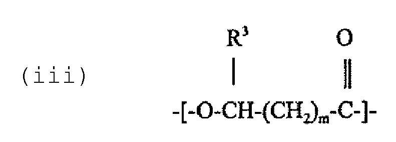 wobei R³ H, ein C₁₋₁₉-Alkyl oder ein C₁₋₁₉-Alkenyl ist, und m 1 oder 2 ist; und wobei die zusätzliche zufällig wiederholte Monomereinheit nicht die gleiche wie die erste oder die zweite zufällig wiederholte Monomereinheit ist.

## Revendications

1. Utilisation d'un copolymère de polyhydroxyalcanoate biodégradable comprenant deux unités monomères à répétition aléatoire, dans laquelle la première unité monomère à répétition aléatoire a la structure suivante : 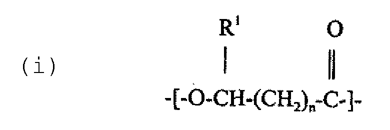 dans laquelle R¹ est H ou un alkyle en C₁₋C₂, et n est 1 ou 2 ; et la seconde unité monomère à répétition aléatoire a la structure suivante : 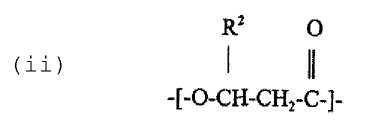 dans laquelle R² est un alkyle en C₃-C₁₉ ou un alcényle en C₃-C₁₉ ; et dans laquelle au moins 50 % des unités monomère à répétition aléatoire ont la structure de la première unité monomère à répétition aléatoire
en tant que revêtement améliorant la résistance à la graisse d'articles de restauration.

2. Utilisation selon la revendication 1, dans laquelle l'article de restauration comprend un substrat de papier ou un substrat de bois.

3. Utilisation d'un copolymère de polyhydroxyalcanoate biodégradable comprenant deux unités monomères à répétition aléatoire, dans laquelle la première unité monomère à répétition aléatoire a la structure suivante : 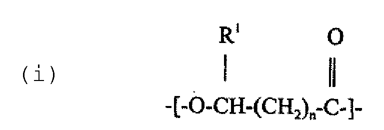 dans laquelle R¹ est H ou un alkyle en C₁-C₂, et n est 1 ou 2 ; et la seconde unité monomère à répétition aléatoire a la structure suivante : 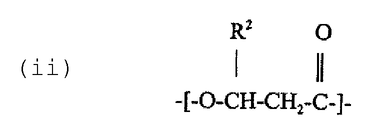 dans laquelle R² est un alkyle en C₃-C₁₉ ou un alcényle en C₃-C₁₉ ; et dans laquelle au moins 50 % des unités monomère à répétition aléatoire ont la structure de la première unité monomère à répétition aléatoire
en tant que composant fournissant une résistance à la graisse aux articles de restauration.

4. Utilisation selon la revendication 3, dans laquelle l'article de restauration est choisi parmi ustensiles, assiettes, gobelets, couvercles de gobelets, plateaux, porte-gobelets, cure-dents, pailles, bâtons et mélanges de ceux-ci.

5. Utilisation selon la revendication 3 ou 4, dans laquelle l'article de restauration est un article moulé ayant une épaisseur ne dépassant pas 3 mm, dans laquelle l'article de restauration est de préférence moulé par moulage par injection ou moulage par soufflage.

6. Utilisation selon l'une quelconque des revendications 1 à 5, dans laquelle le copolymère de polyhydroxyalcanoate biodégradable comprend en outre une troisième unité monomère à répétition aléatoire ayant la structure suivante : 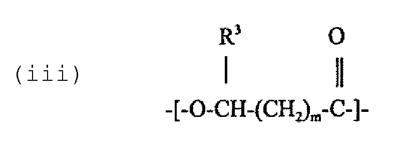 dans laquelle R³ est H, un alkyle en C₁-C₁₉ ou un alcényle en C₁-C₁₉, et m est 1 ou 2 ; et dans laquelle l'unité monomère à répétition aléatoire n'est pas la même que la première unité monomère à répétition aléatoire ou la deuxième unité monomère à répétition aléatoire.
